# FASCICULE DE BREVET EUROPEEN

(11) **EP 2 512 876 B1**
(45) Date de publication et mention de la délivrance du brevet: **28.08.2013**
(21) Numéro de dépôt: 10801629.6
(22) Date de dépôt: 06.12.2010
(51) Int. Cl.: B60R 25/02

(54) **AGENCEMENT DE MOYENS ANTIVOL A L'INTERIEUR D'UN VEHICULE AUTOMOBILE**
ANORDNUNG VON ANTIDIEBSTAHLMITTEL IN EINEM KRAFTFAHRZEUG
ASSEMBLY OF ANTITHEFT MEANS INSIDE A VEHICLE

(30) Priorité: 16.12.2009 FR 0959040
(43) Date de publication de la demande: 24.10.2012
(73) Titulaire: Renault S.A.S., 92100 Boulogne-Billancourt (FR)
(72) Inventeur: ALLEMMOZ, Guilhem, F-92190 Meudon (FR)
(86) Numéro de dépôt international: PCT/FR2010/052616
(87) Numéro de publication internationale: WO 2011/080437

(56) Documents cités:
- DE-U1-202009 004 287
- FR-A1- 2 721 274
- GB-A- 2 191 981
- GB-A- 2 248 593
- GB-A- 2 282 113

## Description

L'invention concerne un véhicule automobile dans lequel un siège est muni d'un dossier, dont un bord supérieur est monté pivotant autour d'un axe transversal porté par un élément de structure du toit du véhicule, apte à occuper une position normale d'utilisation sensiblement verticale et une position relevée dans laquelle le dossier a effectué un pivotement autour de son axe transversal vers l'avant du véhicule.

Un tel véhicule automobile selon le préambule de la revendication 1 est connu du DE 202009 004 287 U. . Les véhicules de type sans portes présentent l'inconvénient d'être faciles à voler.

Afin de pallier ces inconvénients, l'invention a pour objet un véhicule automobile avec de moyens antivol simple, efficace et peu onéreux.

A cet effet, l'invention propose un véhicule automobile du type cité ci-dessus, caractérisé en ce que lorsque le dossier est en position relevée, une portion inférieure du dossier coopèrer avec un volant du véhicule de manière à former les moyens antivol.

Selon d'autres caractéristiques de l'invention:
- Le volant comporte une jante dans laquelle est ménagée une ouverture délimitée par deux bords, la portion inférieure du dossier comporte une lumière transversale, le dossier et le volant étant aptes à coopérer ensemble selon les étapes suivantes :
   - dans une première étape, on relève le dossier jusqu'à ce que la lumière de la portion inférieure du dossier soit en regard de l'ouverture de la jante du volant,
   - dans une deuxième étape, par une rotation du volant, on introduit un des bords de l'ouverture de la jante du volant à l'intérieur de la lumière de la portion inférieure du dossier,
   - dans une troisième étape, on fait pivoter la jante à l'intérieur de la lumière jusqu'à ce que l'ouverture de la jante soit à distance de la lumière du dossier,
   - dans une quatrième étape, on tourne le volant en sens inverse du premier sens, jusqu'à ce qu'il atteigne une position verrouillée.
- Le volant comporte une jante, la portion inférieure du dossier comporte une lumière transversale, le dossier et le volant étant aptes à coopérer ensemble selon les étapes suivantes :
   - dans une première étape, on relève le dossier jusqu'à ce que la lumière de la portion inférieure du dossier soit en vis-à-vis d'une partie inférieure de la jante du volant,
   - dans une deuxième étape, on introduit la partie inférieure de la jante du volant à l'intérieur de la lumière de la portion inférieure du dossier,
   - dans une troisième étape, on tourne le volant dans un sens puis dans l'autre jusqu'à ce qu'il atteigne une position verrouillée,
   - dans une quatrième étape, on introduit un câble solidaire de l'habitacle du véhicule et muni d'un cadenas à l'intérieur de la jante du volant, sous le dossier de siège.
- Le volant comporte une jante, la portion inférieure du dossier comporte une lumière transversale, le dossier et le volant étant aptes à coopérer ensemble selon les étapes suivantes :
   - dans une première étape, on relève le dossier jusqu'à ce que la lumière de la portion inférieure du dossier soit en vis-à-vis d'une partie inférieure de la jante du volant,
   - dans une deuxième étape, on introduit la partie inférieure de la jante du volant à l'intérieur de la lumière de la portion inférieure du dossier,
   - dans une troisième étape, on tourne le volant dans un sens puis dans l'autre jusqu'à ce qu'il atteigne une position verrouillée,
   - dans une quatrième étape, on dispose un cadenas sur la jante du volant, sous le dossier de siège, de manière à empêcher la désolidarisation du dossier et du volant.

D'autres caractéristiques et avantages de l'invention apparaîtront à la lecture de la description d'exemples de réalisation d'un agencement de moyens antivol à l'intérieur d'un véhicule automobile en référence aux dessins annexés dans lesquels :
- La figure 1 est une vue latérale d'un véhicule comportant un agencement de moyens antivol selon l'invention en configuration non utilisée.
- La figure 2 est une vue latérale d'un véhicule comportant l'agencement de moyens antivol de la figure 1 en configuration d'utilisation.
- La figure 3 est une vue détaillée en perspective d'un premier mode de réalisation de l'agencement selon l'invention, avant utilisation.
- La figure 4 est une vue du premier mode de réalisation de la figure 3 représenté lors d'une étape intermédiaire de sa mise en place.
- La figure 5 est une vue du premier mode de réalisation des figures 3 et 4 représenté dans une dernière étape de sa mise en place.
- La figure 6 est une vue en perspective d'un deuxième mode de réalisation de l'agencement antivol représenté avant sa mise en place.
- La figure 7 est une vue en perspective du deuxième mode de réalisation de la figure 6 représenté lors d'une étape intermédiaire de sa mise en place.
- La figure 8 est une vue latérale d'un véhicule comportant le deuxième mode de réalisation des figures 6 et 7, représenté dans une dernière étape de sa mise en place.
- La figure 9 est une vue d'un véhicule comportant un troisième mode de réalisation de l'agencement représenté dans une dernière étape de sa mise en place.

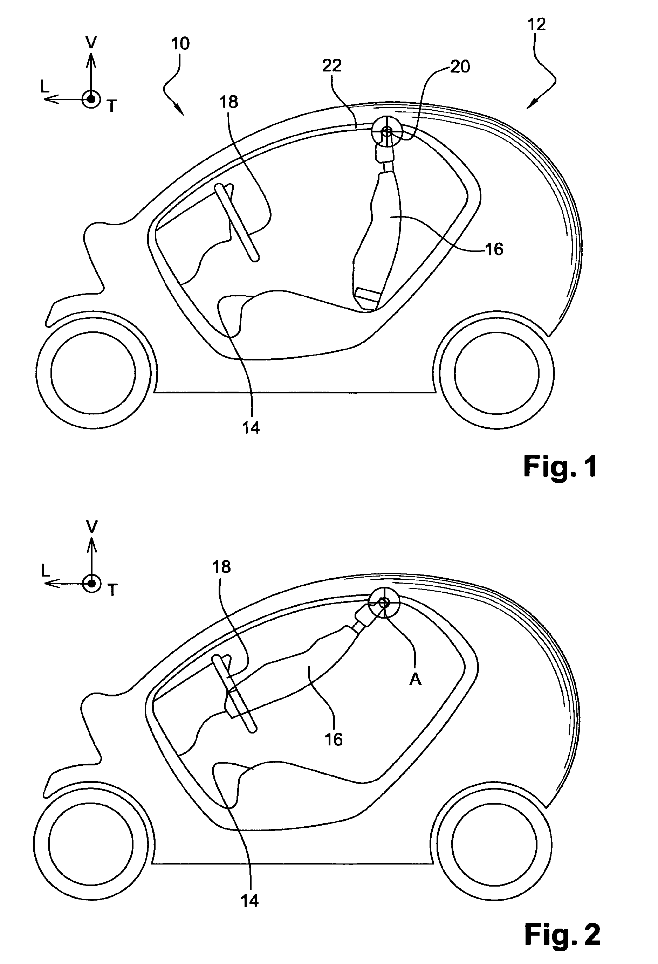

Dans la description qui suit, nous prendrons à titre non limitatif une orientation longitudinale, verticale et transversale indiquée par le trièdre L,V,T des figures 1 à 9.

Des éléments identiques ou analogues sont désignés par les mêmes chiffres de référence.

A l'exception des éléments spécifiques du poste de conduite, le véhicule présente une symétrie générale par rapport à un plan longitudinal médian.

Tel que représenté à la figure 1, un véhicule 10 comporte un siège 12, muni d'une assise 14 et d'un dossier 16. Dans les exemples décrits ici, le véhicule 10 ne comporte pas de portes.

Le siège 10 est situé en vis-à-vis du poste de conduite du véhicule et par conséquent en face d'un volant 18.

L'agencement de moyens antivol est représenté ici en configuration non utilisée, le dossier 16 étant dans une position d'utilisation sensiblement verticale dans laquelle un passager peut s'asseoir sur le siège 12 pour conduire le véhicule 10.

Tel que représenté à la figure 2, le dossier 16 est passé en position relevée, un bord supérieur 20 du dossier 16 étant monté pivotant autour d'un axe transversal A porté par un élément de structure d'un toit 22 du véhicule 10.

Lorsque le dossier 16 est en position relevée, il peut alors coopérer avec le volant 18 de façon à former des moyens antivol, limitant ainsi les risques de vol du véhicule.

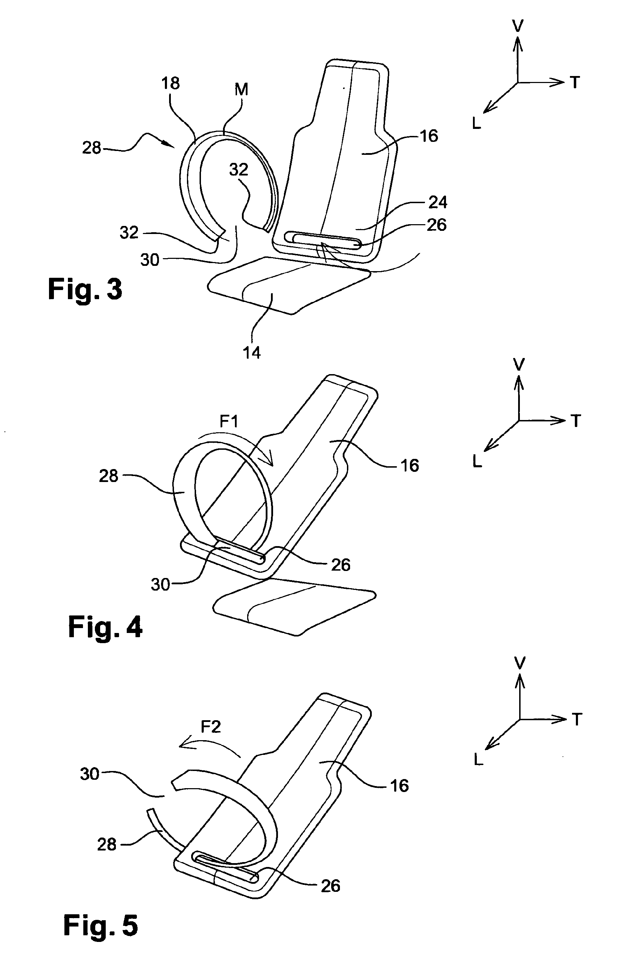

Tel que représenté à la figure 3, selon un premier mode de réalisation de l'agencement, une portion inférieure 24 du dossier 16 comporte une lumière transversale 26, tandis que le volant 18 présente une jante 28, dont la périphérie est incomplète, dans laquelle a été ménagée une ouverture 30. L'ouverture 30 est située dans une partie basse du volant 18. Elle est délimitée par des bords 32 formés par des zones de section sensiblement perpendiculaires à une ligne médiane M de la jante 28.

Tel que représenté à la figure 4, le dossier 16 a été relevé par un pivotement autour de son axe A de manière à amener la lumière transversale 26 en vis-à-vis de l'ouverture 30. Un des bords 32 de l'ouverture 30 de la jante 28 est alors introduit à l'intérieur de la lumière 26 en faisant tourner le volant 18 selon un premier sens indiqué par la flèche F1.

Ensuite, tel que représenté à la figure 5, le volant a été tourné de façon à amener l'ouverture 30 à distance de la lumière 26. Le volant 18 est ensuite tourné dans un sens inverse indiqué par la flèche F2 du premier sens indiqué par la flèche F1 jusqu'à ce qu'il atteigne une position verrouillée.

Il n'est alors plus possible de rabaisser le dossier de siège. Le véhicule ne peut donc pas être utilisé sans donner lieu à des manoeuvres compliquées.

Ainsi, la mise en place des moyens antivol à l'intérieur du véhicule s'effectue en plusieurs étapes :
- Dans une première étape, on relève le dossier 16 de façon à ramener la lumière 26 en regard de l'ouverture 30 de la jante 28.
- Dans une deuxième étape, on introduit un des bords 32 de l'ouverture 30 à l'intérieur de la lumière 26 en faisant tourner le volant selon un premier sens indiqué par la flèche F1.
- Dans une troisième étape, on fait tourner le volant dans le sens indiqué par la flèche F1 jusqu'à éloigner l'ouverture 30 de la lumière 26.
- Dans une quatrième étape, on fait tourner le volant dans le sens inverse au premier sens jusqu'à ce que le volant 18 se bloque en position verrouillée.

Dans un deuxième mode de réalisation de l'agencement, représenté à la figure 5, le dossier 16 est identique au dossier du premier mode de réalisation. Il comporte ainsi une lumière 26 dans sa portion inférieure 24 et présente un bord supérieur 32 monté à rotation autour d'un axe A porté par un élément de structure du toit du véhicule.

Le deuxième mode de réalisation diffère en fait du premier mode en ce que la jante 28 du volant 18 est complète et ne comporte pas d'ouverture.

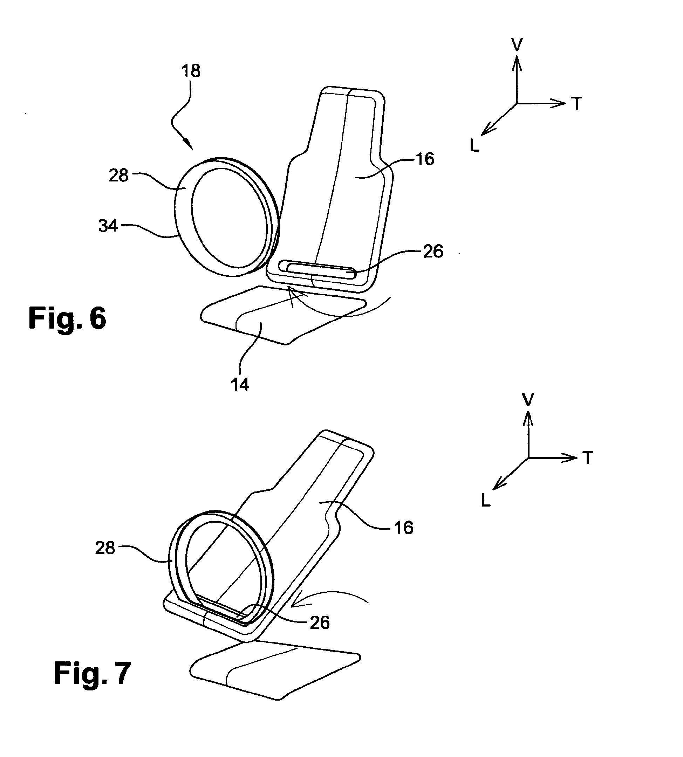

Tel que représenté à la figure 6, le dossier 16 est relevé en le faisant pivoter autour de son axe A jusqu'à ce que la lumière 26 soit en regard d'une partie basse 34 du volant 18.

Tel que représenté à la figure 7, la partie basse 34 du volant 38 est introduite à l'intérieur de la lumière 26, puis le volant est verrouillé en le faisant tourner dans un sens, puis en sens inverse jusqu'à ce qu'il atteigne une position bloquée.

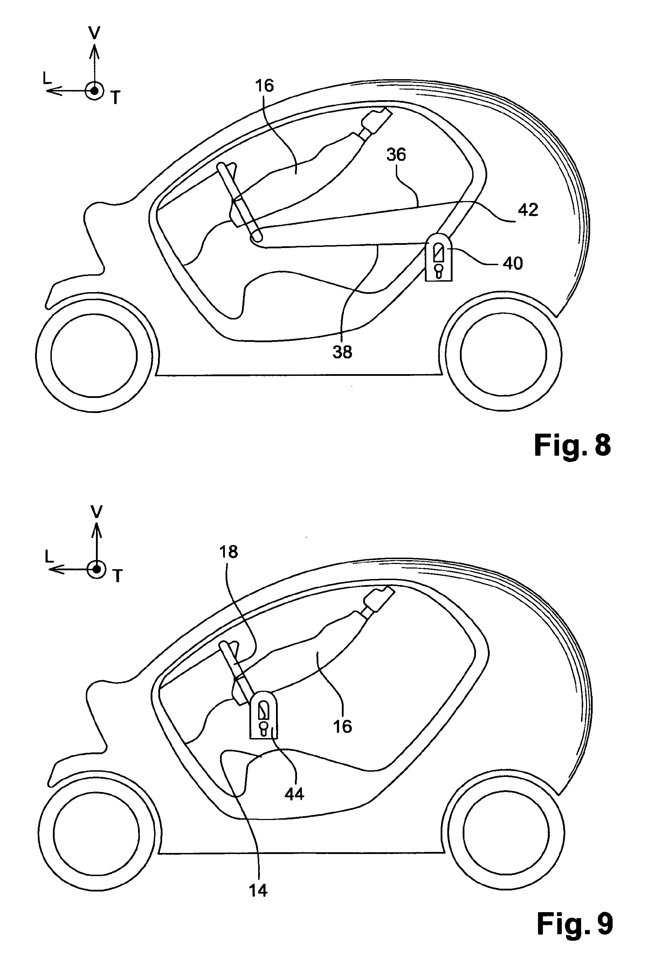

Tel que représenté à la figure 8, le véhicule comporte en outre un antivol supplémentaire constitué par un câble 36 dont une extrémité 38 est munie d'un cadenas 40. Le câble 36 est solidaire d'un élément 42 de l'habitacle du véhicule.

L'extrémité 38 est passée à l'intérieur de la jante 28, sous le dossier 16, puis est fixée à l'élément 42 à l'aide du cadenas 40. Il n'est alors plus possible de rabaisser le siège. Le véhicule ne peut donc pas être utilisé sans donner lieu à des manoeuvres compliquées.

Ainsi, la mise en place des moyens antivol à l'intérieur du véhicule s'effectue en plusieurs étapes :
- Dans une première étape, on relève le dossier 16 de façon à ramener la lumière 26 en regard de l'ouverture 30 de la jante 28.
- Dans une deuxième étape, on introduit la partie basse du volant 18 à l'intérieur de la lumière 26
- Dans une troisième étape, on fait tourner le volant dans un sens puis dans un autre jusqu'à ce qu'il atteigne une position de blocage.
- Dans une quatrième étape, on attache la partie inférieure 32 du volant située sous le dossier 16 à l'aide du câble 36.

Le troisième mode de réalisation, représenté à la figure 9, comporte un dossier 16 de siège et un volant 18 identiques à ceux du deuxième mode de réalisation.

Le troisième mode de réalisation diffère du deuxième mode de réalisation en ce que l'antivol supplémentaire est différent. Il est constitué par un cadenas 44, attaché directement à la jante 28 au niveau de la partie basse 34 du volant située sous le dossier 16. La taille du cadenas 44 est prévue pour qu'il ne soit pas possible d'abaisser le siège et ainsi de déverrouiller les moyens antivol.

Ainsi, la mise en place les moyens antivol à l'intérieur du véhicule s'effectue en plusieurs étapes :
- Dans une première étape, on relève le dossier 16 de façon à ramener la lumière 26 en regard de l'ouverture 30 de la jante 28.
- Dans une deuxième étape, on introduit la partie basse du volant 18 à l'intérieur de la lumière 26
- Dans une troisième étape, on fait tourner le volant dans un sens puis dans un autre jusqu'à ce qu'il atteigne une position de blocage.
- Dans une quatrième étape, le cadenas 44 est attaché à la jante 28, sous le dossier 16.

## Revendications

1. Un véhicule automobile (10) dans lequel un siège (12) est muni d'un dossier (16), dont un bord supérieur (20) est monté pivotant autour d'un axe transversal (A) porté par un élément de structure (22) du toit du véhicule, apte à occuper une position normale d'utilisation sensiblement verticale et une position relevée dans laquelle le dossier (16) a effectué un pivotement autour de son axe transversal (A) vers l'avant du véhicule, **caractérisé en ce que**, lorsque le dossier (16) est en position relevée, une portion inférieure (24) du dossier (16) coopère avec un volant (18) du véhicule (10) de manière à former des moyens antivol.

2. Un véhicule automobile selon la revendication 1, **caractérisé en ce que** le volant (18) comporte une jante (28) dans laquelle est ménagée une ouverture (30) délimitée par deux bords (32), **en ce que** la portion inférieure (24) du dossier (16) comporte une lumière transversale (26), et **en ce que** le dossier(16) et le volant (18) sont aptes à coopérer ensemble selon les étapes suivantes :
- dans une première étape, on relève le dossier (16) jusqu'à ce que la lumière (26) de la portion inférieure (24) du dossier (16) soit en regard de l'ouverture (30) de la jante (28) du volant (18),
- dans une deuxième étape, par une rotation du volant (18), on introduit un des bords (32) de l'ouverture (30) de la jante (18) du volant (28) à l'intérieur de la lumière (26) de la portion inférieure (24) du dossier (16),
- dans une troisième étape, on fait pivoter la jante (28) à l'intérieur de la lumière (26) jusqu'à ce que l'ouverture (30) de la jante (28) soit à distance de la lumière (26) du dossier (16),
- dans une quatrième étape, on tourne le volant (18) en sens inverse du premier sens, jusqu'à ce qu'il atteigne une position verrouillée.

3. Un véhicule automobile selon la revendication 1, **caractérisé en ce que** le volant (18) comporte une jante (28), **en ce que** la portion inférieure (24) du dossier (16) comporte une lumière transversale (26), et **en ce que** le dossier (16) et le volant (18) sont aptes à coopérer ensemble selon les étapes suivantes :
- dans une première étape, on relève le dossier (16) jusqu'à ce que la lumière (26) de la portion inférieure (24) du dossier (16) soit en vis-à-vis d'une partie inférieure (34) de la jante (28) du volant (18),
- dans une deuxième étape, on introduit la partie inférieure (34) de la jante (28) du volant (18) à l'intérieur de la lumière (26) de la portion inférieure (34) du dossier (16),
- dans une troisième étape, on tourne le volant (18) dans un sens puis dans l'autre jusqu'à ce qu'il atteigne une position verrouillée,
- dans une quatrième étape, on introduit un câble (36) solidaire de l'habitacle du véhicule et muni d'un cadenas (40) à l'intérieur de la jante (28) du volant (18), sous le dossier (16) de siège (12).

4. Un véhicule automobile selon la revendication 1, caractérisé en ce le volant (18) comporte une jante (28), en ce que la portion inférieure (24) du dossier (16) comporte une lumière transversale (26), et en ce que le dossier (16) et le volant (18) sont aptes à coopérer ensemble selon les étapes suivantes :
- dans une première étape, on relève le dossier (16) jusqu'à ce que la lumière (26) de la portion inférieure (24) du dossier (16) soit en vis-à-vis d'une partie inférieure (34) de la jante (28) du volant (18),
- dans une deuxième étape, on introduit la partie inférieure (34) de la jante (28) du volant (18) à l'intérieur de la lumière (26) de la portion inférieure (24) du dossier (16),
- dans une troisième étape, on tourne le volant (18) dans un sens puis dans l'autre jusqu'à ce qu'il atteigne une position verrouillée,
- dans une quatrième étape, on dispose un cadenas (44) sur la jante (28) du volant (18), sous le dossier (16) de siège (12), de manière à empêcher la désolidarisation du dossier (16) et du volant (18).

## Patentansprüche

1. Kraftfahrzeug (10), bei dem ein Sitz (12) mit einer Rückenlehne (16) versehen ist, von der ein oberer Rand (20) um eine Querachse (A) schwenkbar montiert ist, die von einem Strukturelement (22) des Dachs des Fahrzeugs getragen wird, die eine im Wesentlichen senkrechte normale Nutzungsstellung und eine angehobene Stellung einnehmen kann, in der die Rückenlehne (16) eine Drehung um ihre Querachse (A) zur Vorderseite des Fahrzeugs durchgeführt hat, **dadurch gekennzeichnet, dass**, wenn die Rückenlehne (16) in der angehobenen Stellung ist, ein unterer Teil (24) der Rückenlehne (16) mit einem Lenkrad (18) des Fahrzeugs (10) zusammenwirkt, um eine Diebstahlsicherungseinrichtung zu bilden.

2. Kraftfahrzeug nach Anspruch 1, **dadurch gekennzeichnet, dass** das Lenkrad (18) einen Kranz (28) aufweist, in dem eine von zwei Rändern (32) begrenzte Öffnung (30) ausgespart ist, dass der untere Teil (24) der Rückenlehne (16) ein Querlangloch (26) aufweist, und dass die Rückenlehne (16) und das Lenkrad (18) gemäß den folgenden Schritten zusammenwirken können:
- in einem ersten Schritt wird die Rückenlehne (16) angehoben, bis das Langloch (26) des unteren Teils (24) der Rückenlehne (16) der Öffnung (30) des Kranzes (28) des Lenkrads (18) gegenüberliegt,
- in einem zweiten Schritt wird durch eine Drehung des Lenkrads (18) einer der Ränder (32) der Öffnung (30) des Kranzes (28) des Lenkrads (18) ins Innere des Langlochs (26) des unteren Teils (24) der Rückenlehne (16) eingeführt,
- in einem dritten Schritt wird der Kranz (28) im Inneren des Langlochs (26) geschwenkt, bis die Öffnung (30) des Kranzes (28) vom Langloch (26) der Rückenlehne (16) entfernt ist,
- in einem vierten Schritt wird das Lenkrad (18) in Gegenrichtung zur ersten Richtung gedreht, bis es eine verriegelte Stellung erreicht.

3. Kraftfahrzeug nach Anspruch 1, **dadurch gekennzeichnet, dass** das Lenkrad (18) einen Kranz (28) aufweist, dass der untere Teil (24) der Rückenlehne (16) ein Querlangloch (26) aufweist, und dass die Rückenlehne (16) und das Lenkrad (18) gemäß den folgenden Schritten zusammenwirken können:
- in einem ersten Schritt wird die Rückenlehne (16) angehoben, bis das Langloch (26) des unteren Teils (24) der Rückenlehne (16) einem unteren Bereich (34) des Kranzes (28) des Lenkrads (18) gegenüberliegt,
- in einem zweiten Schritt wird der untere Teil (34) des Kranzes (28) des Lenkrads (18) ins Innere des Langlochs (26) des unteren Teils (34) der Rückenlehne (16) eingeführt,
- in einem dritten Schritt wird das Lenkrad (18) in der einen und dann in der anderen Richtung gedreht, bis es eine verriegelte Stellung erreicht,
- in einem vierten Schritt wird ein fest mit dem Innenraum des Fahrzeug verbundenes und mit einem Vorhängeschloss (40) versehenes Kabel (36) ins Innere des Kranzes (28) des Lenkrads (18) unter der Rückenlehne (16) des Sitzes (12) eingeführt.

4. Kraftfahrzeug nach Anspruch 1, **dadurch gekennzeichnet, dass** das Lenkrad (18) einen Kranz (28) aufweist, dass der untere Teil (24) der Rückenlehne (16) ein Querlangloch (26) aufweist, und dass die Rückenlehne (16) und das Lenkrad (18) gemäß den folgenden Schritten zusammenwirken können:
- in einem ersten Schritt wird die Rückenlehne (16) angehoben, bis das Langloch (26) des unteren Teils (24) der Rückenlehne (16) sich gegenüber einem unteren Bereich (34) des Kranzes (28) des Lenkrads (18) befindet,
- in einem zweiten Schritt wird der untere Bereich (34) des Kranzes (28) des Lenkrads (18) ins Innere des Langlochs (26) des unteren Teils (24) der Rückenlehne (16) eingeführt,
- in einem dritten Schritt wird das Lenkrad (18) in der einen und dann in der anderen Richtung gedreht, bis es eine verriegelte Stellung erreicht,
- in einem vierten Schritt wird ein Vorhängeschloss (44) auf dem Kranz (28) des Lenkrads (18) unter der Rückenlehne (16) des Sitzes (12) angeordnet, um das Lösen der Rückenlehne (16) vom Lenkrad (18) zu verhindern.

## Claims

1. Motor vehicle (10) in which a seat (12) is provided with a backrest (16), an upper edge (20) of which is mounted so as to pivot about a transverse spindle (A) carried by a structural element (22) of the vehicle roof, said backrest (16) being able to occupy an approximately vertical normal use position and a raised position in which the backrest (16) has pivoted about its transverse spindle (A) towards the front of the vehicle, **characterized in that**, when the backrest (16) is in the raised position, a lower portion (24) of the backrest (16) engages with a steering wheel (18) of the vehicle (10) so as to form antitheft means.

2. Motor vehicle according to Claim 1, **characterized in that** the steering wheel (18) has a rim (28) in which there is formed an opening (30) delimited by two edges (32), **in that** the lower portion (24) of the backrest (16) has a transverse slot (26), and **in that** the backrest (16) and the steering wheel (18) are able to engage with one another according to the following steps:
- in a first step, the backrest (16) is raised until the slot (26) in the lower portion (24) of the backrest (16) is next to the opening (30) in the rim (28) of the steering wheel (18),
- in a second step, by rotation of the steering wheel (18), one of the edges (32) of the opening (30) in the rim (28) of the steering wheel (18) is introduced into the slot (26) in the lower portion (24) of the backrest (16),
- in a third step, the rim (28) is pivoted inside the slot (26) until the opening (30) in the rim (28) is at a distance from the slot (26) in the backrest (16),
- in a fourth step, the steering wheel (18) is turned in the opposite direction to the first direction, until it reaches a locked position.

3. Motor vehicle according to Claim 1, **characterized in that** the steering wheel (18) has a rim (28), **in that** the lower portion (24) of the backrest (16) has a transverse slot (26), and **in that** the backrest (16) and the steering wheel (18) are able to engage with one another according to the following steps:
- in a first step, the backrest (16) is raised until the slot (26) in the lower portion (24) of the backrest (16) faces a lower part (34) of the rim (28) of the steering wheel (18),
- in a second step, the lower part (34) of the rim (28) of the steering wheel (18) is introduced into the slot (26) in the lower portion (34) of the backrest (16),
- in a third step, the steering wheel (18) is turned in one direction and then in the other until it reaches a locked position,
- in a fourth step, a cable (36) secured to the passenger compartment of the vehicle and provided with a padlock (40) is introduced into the rim (28) of the steering wheel (18), under the backrest (16) of the seat (12).

4. Motor vehicle according to Claim 1, **characterized in that** the steering wheel (18) has a rim (28), **in that** the lower portion (24) of the backrest (16) has a transverse slot (26), and **in that** the backrest (16) and the steering wheel (18) are able to engage with one another according to the following steps:
- in a first step, the backrest (16) is raised until the slot (26) in the lower portion (24) of the backrest (16) faces a lower part (34) of the rim (28) of the steering wheel (18),
- in a second step, the lower part (34) of the rim (28) of the steering wheel (18) is introduced into the slot (26) in the lower portion (24) of the backrest (16),
- in a third step, the steering wheel (18) is turned in one direction and then in the other until it reaches a locked position,
- in a fourth step, a padlock (44) is arranged on the rim (28) of the steering wheel (18), under the backrest (16) of the seat (12), so as to prevent the backrest (16) and the steering wheel (18) from separating.
